(19) Europäisches Patentamt
European Patent Office
Office européen des brevets

(11) **EP 0 984 300 B1**

(12) **EUROPÄISCHE PATENTSCHRIFT**

(45) Veröffentlichungstag und Bekanntmachung des Hinweises auf die Patenterteilung:
**22.10.2003 Patentblatt 2003/43**

(51) Int Cl.⁷: **G01S 13/93**, G01S 15/93

(21) Anmeldenummer: **99115306.5**

(22) Anmeldetag: **03.08.1999**

(54) **Einparkhilfe für ein Kraftfahrzeug**

Parking-aid device for a motor vehicle

Dispositif pour faciliter le stationnement d'un véhicule

(84) Benannte Vertragsstaaten:
**DE FR GB**

(30) Priorität: **02.09.1998 DE 19839942**

(43) Veröffentlichungstag der Anmeldung:
**08.03.2000 Patentblatt 2000/10**

(73) Patentinhaber: **Siemens Aktiengesellschaft 80333 München (DE)**

(72) Erfinder: **Schröder, Hans-Joachim 65189 Wiesbaden (DE)**

(56) Entgegenhaltungen:
**EP-A- 0 707 220        EP-A- 0 717 290
EP-A- 0 740 166        US-A- 5 008 678**

**Beschreibung**

Die Erfindung betrifft eine Einparkhilfe für ein Kraftfahrzeug, welche den Abstand eines Objektes zu dem Kraftfahrzeug berührungslos mißt und mehrere Sensoren aufweist, die an dem Kraftfahrzeug angeordnet sind, wobei jeder Sensor ein Signal ausstrahlt und das von einem sich in Strahlrichtung befindlichen Objekt reflektierte Signal wieder empfängt, wobei eine mit den Sensoren verbundene Auswerteeinrichtung aus den empfangenen Signalen den Abstand zwischen Objekt und dem Kraftfahrzeug ermittelt.

Um das Fahren mit dem Kraftfahrzeug zu erleichtern und Zusammenstöße mit Wagen oder anderen im Weg befindlichen Gegenständen zu verhindern, ist es bekannt, an der Front- und/oder Rückseite des Kraftfahrzeuges Sensoren vorzusehen, welche beispielsweise Ultraschall- oder Radarsignale aussenden und die von dem Hindernis reflektierten Signale wieder zu empfangen. Dabei wird der Abstand zwischen dem am Kraftfahrzeug angeordneten Sensor und dem Hindernis aus der Laufzeit des Signals vom Sensor zum Hindernis und wieder zurückbestimmt.

Eine gattungsgemäße Kollisionswarneinrichtung ist aus der noch unveröffentlichten Patentanmeldung DE 197 11 467.9 bekannt, bei welcher eine berührungslose Abstandsmessung zwischen einem Hindernis und einem Kraftfahrzeug mit mehreren Sensoren durchgeführt wird. Dabei sendet immer ein Sensor ein Sensorsignal aus, welches von einem sich im Sensorstrahl befindlichen Objekt reflektiert wird. Das reflektierte Signal wird von allen Sensoren empfangen. Um imaginäre Objekte sicher ausschließen zu können, werden aus den Laufzeiten dreier Sensoren alle möglichen Positionen des Objektes zum Kraftfahrzeug bestimmt. Dabei werden nur die Positionen des Objektes als real anerkannt, welche durch alle drei Sensoren detektiert wurden.

Gemäß EP 0 707 220 A2 ist ein Radarsystem zur Kollisionsvermeidung an einem Kraftfahrzeug bekannt, bei welchem um den Umfang des Kraftfahrzeuges mehrere Radarmodule verteilt sind, die unterschiedliche Detektionsbereiche aufweisen. Der Sensorstrahl jedes Moduls wird dabei in eine andere Richtung abgestrahlt.

Ein kompaktes Hinderniserkennungssystem mit verschiedenen Antennen ist aus EP 0 740 166 A1 bekannt. Dabei ist an jeder Außenseite einer Stoßstange je ein Radarsensor befestigt. Aufgrund der verschiedenen Antennenkonfigurationen werden unterschiedliche Detektionsbereiche erzeugt.

Insbesondere für die als indirekt bezeichnete Laufzeitmessung, bei welcher das Signal von einem Sensor ausgesandt und das reflektierte Signal von einem anderen Sensor empfangen wird, ist es notwendig, dass die Sensoren mit Hilfe einer Auswerteeinrichtung synchronisiert werden, so dass jeder Sensor auch empfangsbereit ist, wenn das von dem Hindernis reflektierte Signal ihn erreicht. Dabei steuert die Auswerteeinrichtung die zeitliche Abfolge in dem Sinn, dass ein Sensor ein Signal sendet und anschließend alle Sensoren zeitgleich empfangsbereit geschaltet werden.

Insbesondere beim Einsatz von Radarsensoren ist auf Grund der schnellen Signallaufzeiten des ausgesandten und reflektierten Sensorsignales die elektrische Synchronisation der Sensoren sehr aufwendig, wenn nicht gar unmöglich, da die Laufzeiten der Steuersignale auf den Verbindungsleitungen zwischen Auswerteeinrichtung und Sensor immer langsamer sind als die sich annähernd mit Lichtgeschwindigkeit ausbreitenden Sensorsignale.

Der Erfindung liegt somit die Aufgabe zu Grunde, eine Anordnung zur berührungslosen Messung des Abstandes zwischen einem Objekt und einem Kraftfahrzeug anzugeben, bei welcher der Aufwand für die elektrische Synchronisierung der Sensoren reduziert wird und trotzdem eine zuverlässige Erkennung des realen Objektes für eine genaue Abstandsmessung möglich ist.

Erfindungsgemäß wird die Aufgabe durch die Merkmale des Patentanspruchs 1 gelöst.

Die Erfindung hat den Vorteil, dass aufgrund der Anordnung der Sensoren annähernd an dem selben Ort auf indirekte Laufzeitmessungen vollständig verzichtet werden kann. Die aufwendige elektronische Synchronisation hinsichtlich der Laufzeiten entfällt somit. Das reale Objekt wird allein durch direkte Laufzeitmessungen vom Sensor zum Objekt und zurück zum selben Sensor bestimmt.

Durch das bauliche Zurücksetzen der Sensoren hinter den Stoßfänger werden Messlücken im Nahbereich des Sensors vermieden, da der Messbereich der Sensoren auch im Nahbereich des Stoßfängers voll wirksam ist.

Bei einer Weiterbildung, bei welcher der Aufwand für die Unterscheidung der empfangenen Signale reduziert werden kann, steuert die Auswerteeinrichtung nacheinander alle Sensoren zur Aussendung des Sensorsignales an. Dabei wird jeder Sensor mit derselben Frequenz angesteuert.

Durch die vorgeschlagene Anordnung ist eine größere Redundanz der Erfassungsbereiche der Einzelwandler im besonders kritischen Nahbereich erzielbar, wodurch eine bessere Qualität der Berechnung der Objektentfernung möglich ist.

In einer Ausgestaltung bestimmt die Auswerteeinrichtung die Laufzeit zwischen dem Aussenden des Sensorsignals eines Sensors und dem Empfangen des reflektierten Sensorsignals durch den gleichen Sensor und ermittelt aus den so ermittelten Laufzeiten der drei Sensoren die Position und den Abstand des Kraftfahrzeuges zum Objekt.

Eine kompakte Einrichtung wird erzielt, wenn die Auswerteeinrichtung eine bauliche Einheit mit einem Sensor bildet. Die Auswerteeinheit kann aber auch eine im Kraftfahrzeug an sich vorhandene Elektronik sein.

Die erfindungsgemäße Einrichtung eignet sich besonders für Radarsensoren, bei welchen die Probleme bei der Laufzeitsynchronisation besonders gravierend sind.

Die Erfindung läßt zahlreiche Ausführungsbeispiele zu. Eines soll anhand der in der Zeichnung dargestellten Figuren näher erläutert werden.

Es zeigt

Figur 1: Anordnung zur Bestimmung des Abstandes zwischen einem Hindernis und einem Kraftfahrzeug.

Figur 2: Auswerteeinrichtung

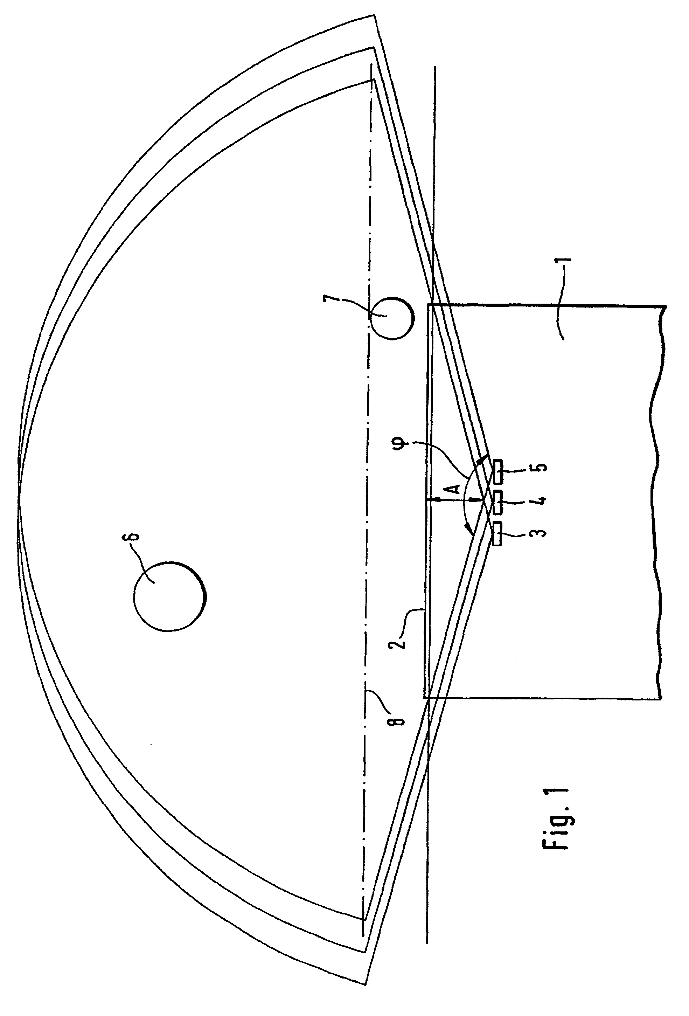

Figur 1 zeigt schematisch eine Rückfahr- und Einparkhilfe, wie sie in Kraftfahrzeugen genutzt wird. An dem rückseitigen Stoßfänger 2 eines Kraftfahrzeuges 1 sind drei Radarsensoren 3, 4, 5 auf gleicher Höhe in unmittelbarer Nähe zu einander angeordnet, wobei der seitliche Abstand der Radarsensoren 3, 4, 5 so gewählt wird, daß Ungenauigkeiten der Sensorsignale sicher verhindert werden. Die Radarsensoren 3, 4, 5 sind dabei unter der Fahrzeugkarosserie am Fahrzeugboden angeordnet und weisen alle den gleichen Abstand A zum Stoßfänger 2 des Kraftfahrzeuges 1 auf. Um die Detektion von Fahrzeugbestandteilen als Hindernis zu verhindern, sind nicht weiter dargestellte Strahlführungskanäle vorgesehen, die zwischen den Radarsensoren 3, 4, 5 und dem Stoßfänger 2 verlaufen und den Strahlengang der Radarsensoren 3, 4, 5 abschirmen.

Die Öffnungswinkel φ der drei Radarsensoren 3, 4, 5 ist annähernd gleich und beträgt ungefähr 140 bis 170 Grad, wodurch der gesamte Stoßfängerbereich auch mit seinen Randbereichen erfaßt wird. Damit kann ein stationäres Hindernis 6, 7 bis zu einem Abstand von mehr als zwei Meter zum Kraftfahrzeug detektiert werden.

Aufgrund dieser Anordnung wird der rückwärtige Kraftfahrzeugbereich vollständig und zuverlässig auf das Vorhandensein von Hindernissen 6, 7 detektiert. Ein Hindernis 7 befindet sich dabei in dem Bereich zwischen Stoßfänger 2 und dem Erkennungshorizont 8. Der Erkennungshorizont 8 erstreckt sich etwa 50 cm entfernt vom Stoßfänger 2 und wird von herkömmlichen Rückfahr- und Einparkhilfen nicht ausgewertet. Durch das Zurücksetzen der Radarsensoren 3, 4, 5 werden auch Hindernisse in diesem Bereich sicher erkannt.

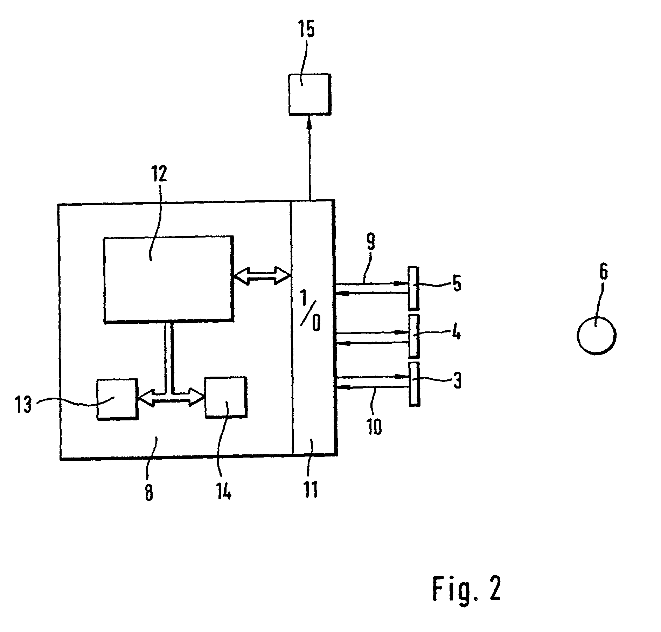

Die verwendeten Radarsensoren 3, 4, 5 dienen sowohl als Sender als auch als Empfänger. Wie in Figur 2 dargestellt, ist eine Auswerteeinheit 8, welche vorzugsweise ein Mikroprozessor ist, über Sende- 9 und Empfangsleitungen 10 mit jedem der Radarsensoren 3, 4, 5 verbunden. Der Mikroprozessor weist dabei eine Ein- und Ausgabeeinheit 11, eine zentrale Recheneinheit 12 sowie einen Arbeitsspeicher 13 und einen Festwertspeicher 14 auf.

Die Auswerteeinheit 8 ist mit einer Anzeigeeinrichtung 15 verbunden, welche üblicherweise ein Lautsprecher und/oder eine optische Einrichtung ist, die bei Annäherung des Kraftfahrzeuges an ein Hindernis ein Warnsignal abgibt.

Die Auswerteeinheit 8 erzeugt zeitgleich für alle Radarsensoren 3, 4, 5 Steuerimpulse, die über die Leitung 9 an den jeweiligen Radarsensor 3, 4 und 5 weitergeleitet und dort in entsprechende Radarsignale im Mikroimpulsbereich umgewandelt werden. Jeder Radarsensor 3, 4, 5 sendet dabei einen Radarstrahl mit einer anderen Frequenz aus. Dabei wird der von jedem Radarsensor 3, 4, 5 ausgesandte Radarstrahl vom Objekt 6 (bzw. Objekt 7 in Figur 1) reflektiert, wobei jeder Radarsensor 3, 4, 5 sein reflektiertes Radarsignal (Echos) empfängt. Nach dem Aussenden der Signale werden alle drei Radarsensoren 3, 4, 5 durch die Auswerteinheit 8 zeitgleich auf Empfang geschaltet und das empfangene Echo in ein elektrisches Signal umgewandelt, das über die Leitung 10 von jedem Radarsensor 3, 4, 5 an die Auswerteinheit 8 geleitet wird. Die Auswerteinheit 8 mißt mit Hilfe ihres internen, nicht weiter dargestellten Taktgebers die Laufzeit zwischen der Ausendung und dem Empfang des elektrischen Impulses für jeden Radarsensor 3, 4, 5 und speichert diese im Arbeitsspeicher 13 ab.

Üblicherweise wird aus der Laufzeit t des Ultraschallsignals der Abstand s zwischen dem Kraftfahrzeug (Sensor) und dem Hindernis annäherungsweise nach der bekannten Gleichung

$$s = 1/2 \times c \times t$$

bestimmt, wobei c die Lichtgeschwindigkeit darstellt.

Zur genauen Signalauswertung und Abstandsbestimmung wird das an sich bekannten Auswerteverfahren genutzt, welche beispielsweise aus DE 40 23 538 A1 beschrieben ist. Der nach o.g. Formel bestimmte Abstand eines Sensors zum Hindernis läßt alle möglichen Positionen des Hindernisses zu, welche auf einem Kreisbogen angeordnet sind. Die tatsächliche Position des Hindernisses 6, 7 ergibt sich aus dem Schnittpunkt der drei Kreisbögen, wobei jeder Kreisbogen auf die Messung eines anderen Sensors zurückzuführen ist.

**Patentansprüche**

1. Einparkhilfe für ein Kraftfahrzeug, welche den Abstand eines Objektes zum Kraftfahrzeug berührungslos misst und mehrere Radarsensoren aufweist, die an dem Kraftfahrzeug angeordnet sind, wobei jeder Radarsensor ein Signal ausstrahlt und dass von einem sich in Strahlrichtung befindlichen Objekt reflektierte Signal wieder empfängt, wobei eine mit den Radarsensoren verbundene Auswerteinrichtung aus den empfangenen Signalen den Abstand zwischen Objekt und dem Kraftfahrzeug ermittelt, **dadurch gekennzeichnet, dass** drei Radarsensoren (3, 4, 5) zu annähernden Überdekkung desselben Detektionsbereiches beabstandet zur Außenkontur (2) des Kraftfahrzeuges (1) annähernd an demselben Ort nebeneinander angeordnet sind, wobei der Hauptstrahl jedes Radarsensors (3, 4, 5) ungefähr den gleichen Öffnungswinkel (φ) aufweist, so dass der Detektionsbereich jedes Radarsensors (3, 4, 5) die ganze sich in Strahlrichtung des Radarsensors (3, 4, 5) erstreckende Außenkontur und den sich daran anschließenden Raum erfasst.

2. Anordnung nach Anspruch 1 **dadurch gekennzeichnet, dass** die Auswerteeinrichtung 8 die Radarsensoren (3, 4, 5) nacheinander zum Aussenden des Sensorsignales ansteuert, wobei alle Radarsensoren (3, 4, 5) mit der gleichen Frequenz angesteuert werden.

3. Anordnung nach einem der vorhergehenden Ansprüche 1 bis 3 **dadurch gekennzeichnet, dass** die Auswerteeinrichtung (8) die Laufzeit zwischen dem Aussenden des Sensorsignals eines Radarsensors (3, 4, 5) und dem Empfangen des reflektierten Sensorsignals durch den gleichen Radarsensorensor (3, 4, 5) bestimmt und aus den so ermittelten Laufzeiten der drei Radarsensoren (3, 4, 5) die Position und den Abstand des Kraftfahrzeuges (1) zum Objekt (6; 7) bestimmt.

4. Anordnung nach Anspruch 3 **dadurch gekennzeichnet, dass** die Auswerteeinrichtung (8) eine bauliche Einheit mit einem Radarsensor (3, 4, 5) bildet.

5. Anordnung nach Anspruch 4 **dadurch gekennzeichnet, dass** die Auswerteeinrichtung (8) eine im Kraftfahrzeug (1) an sich vorhandene Elektronik ist.

## Claims

1. Parking aid for a motor vehicle, which measures the distance between an object and the motor vehicle in a contactless manner and has a plurality of radar sensors which are arranged on the motor vehicle, each radar sensor emitting a signal and receiving the signal reflected from an object located in the direction of the beam, an evaluation device connected to the radar sensors determining the distance between the object and the motor vehicle from the signals received, three radar sensors (3, 4, 5) are arranged at a distance from the outer contour (2) of the motor vehicle (1) at approximately the same location, next to one another to provide approximate coverage of the same detection area, the main beam of each radar sensor (3, 4, 5) having approximately the same beam angle (φ), with the result that the detection range of each radar sensor (3, 4, 5) covers the entire outer contour extending in the direction of the beam of the radar sensor (3, 4, 5,) and the adjoining space.

2. The arrangement as claimed in Claim 1, wherein the evaluation device 8 activates the radar sensors (3, 4, 5) in succession to transmit the sensor signal, all the radar sensors (3, 4, 5) being activated with the same frequency.

3. The arrangement as claimed in any of preceding Claims 1 to 3, wherein the evaluation device (8) determines the propagation time between the transmission of the sensor signal of a radar sensor (3, 4, 5) and the reception of the reflected sensor signal by the same radar sensor (3, 4, 5) and from the propagation times of the three radar sensors (3, 4, 5) determined in this way, determines the position and distance of the motor vehicle (1) from the object (6;7).

4. The arrangement as claimed in Claim 3, wherein the evaluation device (8) forms a structural unit with one radar sensor (3, 4, 5).

5. The arrangement as claimed in Claim 4, wherein the evaluation device (8) is an electronic system that would be present in the vehicle in any case.

## Revendications

1. Dispositif pour faciliter le stationnement d'un véhicule automobile, qui mesure sans contact l'écart entre un objet et le véhicule automobile et qui présente plusieurs détecteurs radar qui sont disposés sur le véhicule, chaque détecteur radar émettant un signal et recevant le signal réfléchi par un objet situé dans la direction du faisceau, un dispositif d'évaluation relié aux détecteurs radar déterminant à partir des signaux reçus la distance entre l'objet et le véhicule automobile, **caractérisé en ce que** trois détecteurs radar (3, 4, 5) sont disposés les uns à côté des autres sensiblement au même endroit, de manière à couvrir approximativement la même plage de détection, à distance du contour extérieur (2) du véhicule automobile (1), les faisceaux principaux de chaque détecteur radar (3, 4, 5) présentant environ le même angle d'ouverture (φ) de telle sorte que la plage de détection de chaque détecteur radar (3, 4, 5) détecte la totalité du contour extérieur qui s'étend dans la direction de rayonnement du détecteur radar (3, 4, 5) et l'espace qui y est adjacent.

2. Agencement selon la revendication 1, **caractérisé**

**en ce que** le dispositif d'évaluation (8) commande aux détecteurs radar (3, 4, 5) d'émettre successivement le signal de détection, tous les détecteurs radar (3, 4, 5) étant commandés à la même fréquence.

3. Agencement selon l'une des revendications précédentes 1 à 3, **caractérisé en ce que** le dispositif d'évaluation (8) détermine le temps de parcours entre l'émission du signal de détection par un détecteur radar (3, 4, 5) et la réception par le même détecteur radar (3, 4, 5) du signal de détection réfléchi et à partir des temps de parcours ainsi déterminés par les trois détecteurs radar (3, 4, 5), il détermine la position et la distance du véhicule (1) par rapport à l'objet (6; 7).

4. Agencement selon la revendication 3, **caractérisé en ce que** le dispositif d'évaluation (8) forme un module avec un détecteur radar (3, 4, 5).

5. Agencement selon la revendication 4, **caractérisé en ce que** le dispositif d'évaluation (8) est une électronique présente de toute manière dans le véhicule automobile (1).

Fig. 1

Fig. 2